## Europäisches Patentamt
## European Patent Office
## Office européen des brevets

(19)

(11) Veröffentlichungsnummer: **0 146 780**
**B1**

(12)

# EUROPÄISCHE PATENTSCHRIFT

(45) Veröffentlichungstag der Patentschrift:
20.07.88

(21) Anmeldenummer: **84113973.6**

(22) Anmeldetag: **19.11.84**

(51) Int. Cl.⁴: **G 05 D 23/20**, A 47 J 27/62

(54) Anordnung zum Steuern und Regeln der Heizleistung in der Aufheizphase eines Dampfdruckkochgefässes.

(30) Priorität: **24.11.83 DE 3342416**

(43) Veröffentlichungstag der Anmeldung:
**03.07.85 Patentblatt 85/27**

(45) Bekanntmachung des Hinweises auf die Patenterteilung:
**20.07.88 Patentblatt 88/29**

(84) Benannte Vertragsstaaten:
**AT BE CH FR GB IT LI LU NL SE**

(56) Entgegenhaltungen:
**EP-A-0 089 247**
**FR-A-2 492 069**
**GB-A-2 073 455**
**GB-A-2 112 966**

(73) Patentinhaber: **Kurt Wolf & Co. KG,**
**Langwiesenweg 67/71, D-7547 Wildbad (DE)**

(72) Erfinder: **Andre, Wolfram, Eichenweg 7, D-7307**
**Aichwald (DE)**

(74) Vertreter: **Vogel, Georg, Hermann- Essig- Strasse**
**35, D-7141 Schwieberdingen (DE)**

EP 0 146 780 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Steuern und Regeln der Heizleistung in der Aufheizphase eines Dampfdruck-Kochgefäßes, das von einem mittels Stuerschaltung ein- und ausschaltbaren elektrischen Heizelement erwärmt wird und eine Anordnung zur Durchführung des Verfahrens.

Aus der GB-A-2 073 455 ist ein Steuerungssystem für einen elektrischen Verbraucher bekannt, bei dem die Temperatur am Verbraucher gemessen wird und abhängig davon die Heizleistung des Heizelementes über eine elektronische Steuer- und Regelschaltung verändert wird. Dabei kann die gewünschte Temperatur am Verbraucher vorgewählt, d.h. vorgegeben werden. Diese bekannte Steuerung arbeitet als sogenannte Periodengruppensteuerung, bei der die Dauer einer Periodengruppe einer bestimmten Anzahl von Perioden des Netzwechselstromes entspricht und bei der der dem Heizelement vorgeschaltete Halbleiter für jede beliebige Anzahl von Perioden aus der Gesamtzahl der Perioden der Periodengruppe einschaltbar ist, wie sie auch in ELECTRONIQUE & APPLICATIONS INDUSTRIELLES, Nr. 246, 15. Januar 1978, Seite 51, Paris, FR; "Economies d'énergie: régulez votre radiateur 2KW" beschrieben ist.

Bei Steuerungssystemen für das Heizelement eines Dampfdruck-Kochgefäßes wird in der Regel bis zum Erreichen der Siedetemperatur des Wassers oder kurz davor mit voller Heizleistung gearbeitet und erst danach wird auf die vorgegebene, über der Siedetemperatur des Wassers liegende Kochtemperatur eingeregelt, wie die EP-A1-0 089 247 zeigt. Da in der Aufheizphase der Temperaturanstieg pro Zeiteinheit ermittelt wird, der bis zum Erreichen der Siedetemperatur des Wassers etwa konstant ist, wirkt die Regelung erst im Bereich der Siedetemperatur des Wassers, da dann der Temperatur-Zeitverlauf nicht mehr linear ist.

In der später veröffentlichten, nur gemäß Art. 54(3) EPÜ zum Stand der Technik gehörenden EP-A1-0 136 406 ist beschrieben, die Daten, wie den Anstieg der Temperatur-Zeit-Kennlinie und die Zeitdauer vom Erreichen der Temperatur des Beginns der Dampfphase bis zum Erreichen der Verdampfungstemperatur des Wasser, in der Aufheizphase zu erfassen und daraus Anhaltspunkte für den Abkühlvorgang nach dem Abschalten des Heizelementes zu erhalten. Damit läßt sich eine vorzeitige Abschaltung des Heizelementes und eine Ausnützung des Abkühlvorganges zur Einhaltung der vorgegebenen Gar- bzw. Kochzeit erreichen, einen Einfluß dieser Daten auf die Regelung der Heizleistung des Heizelementes ist dabei nicht vorgesehen.

Es ist Aufgabe der Erfindung, ein Verfahren der eingangs erwähnten Art zu schaffen, bei dem automatisch in Abhängigkeit von der Art und Menge des Kochgutes in dem Dampfdruck-Kochgefäß die Aufheizphase so gesteuert und geregelt wird, daß auf schnellste und energiesparendste Weise die Kochtemperatur erreicht und ohne Überschwinger eingeregelt werden kann.

Diese Aufgabe wird nach der Erfindung dadurch gelöst, daß während eines ersten Temperaturbereiches der Aufheizphase bei maximaler Heizleistung die Zeitspanne gemessen wird, die benötigt wird, um das Kochgut von einem unteren, vorgegebenen Temperaturwert auf einen oberen vorgegebenen Temperaturwert zu erwärmen, wobei diese vorgegebenen Temperaturwerte unterhalb der Siedetemperatur des Wassers liegen, daß während des nachfolgenden zweiten Temperaturbereiches der Aufheizphase die gemessene Zeitspanne mit einer vorgegebenen Zeitspanne verglichen wird, wobei dann, wenn die gemessene Zeitspanne die vorgegebene Zeitspanne überschreitet, die Steuerschaltung das Heizelement bis zum Erreichen der Siedetemperatur dauernd eingeschaltet hält, wobei jedoch dann, wenn die gemessene Zeitspanne die vorgegebene Zeitspanne unterschreitet, der Istwert der Temperatur im Dampfdruck-Kochgefäß am Anfang und Ende eines vorgegebenen Zeitintervalles gemessen wird, dann aus diesen beiden Temperaturmeßwerten deren Temperaturdifferenz ermittelt wird und dann die Steuerschaltung in Abhängigkeit von der ermittelten Temperaturdifferenz die Einschaltdauer des Heizelementes innerhalb des folgenden vorgegebenen Zeitintervalls auf eine erste Zeitdauer derart verkürzt, daß diese erste Zeitdauer mit zunehmender Temperaturdifferenz abnimmt, daß während des nachfolgenden dritten Temperaturbereiches der Aufheizphase ab Erreichen der Siedetemperatur bis zu einer vorgegebenen Kochtemperatur mit erhöhtem Dampfdruck diese Temperaturdifferenz innerhalb eines gleich großen vorgegebenen Zeitintervalls in gleicher Weise ermittelt wird, und daß die Steuerschaltung dann in Abhängigkeit von der ermittelten Temperaturdiffernez die Einschaltdauer des Heizelementes innerhalb des folgenden vorgegebenen Zeitintervalls auf eine zweite Zeitdauer derart verkürzt, daß diese zweite Zeitdauer mit zunehmender Temperaturdiffernez um so mehr abnimmt, je größer die ermittelte Temperaturdifferenz und je kleiner die Temperaturabweichung zwischen vorgegebener Kochtemperatur und gemessenem Istwert der Temperatur ist.

Schon vor dem Erreichen der Siedetemperatur wird festgestellt, wie der Anstieg der Temperatur-Zeit-Kennlinie in dem ersten Temperaturbereich ist. Dies gibt Aufschluß über den Inhalt des Dampfdruck-Kochgefäßes. Ist der Temperaturanstieg langsam, dann wird mit voller Heizleistung bis zum Erreichen der Siedetemperatur des Wassers weiter geheizt, während bei steilem Temperaturanstieg die Heizleistung im darauffolgenden zweiten Temperaturbereich bis zur Siedetemperatur schon gedrosselt wird und zwar in Abhängigkeit von der im zweiten Temperaturbereich in einem vorgegebenen Zeitintervall wiederholt ermittelten Temperaturdifferenz.

Ist die Siedetemperatur erreicht, dann wird in jedem Fall in dem anschließenden dritten Temperaturbereich bis zur vorgegebenen Kochtemperatur nicht nur die Temperaturdifferenz in dem gleich großen Zeitintervall ermittelt, sondern es wird auch die Temperaturabweichung zwischen der vorgegebenen Kochtemperatur und dem gemessenen Istwert der Temperatur berücksichtigt. Dabei wird um so mehr gedrosselt, desto kleiner die Temperaturabweichung ist und desto größer die Temperaturdiffernez in dem Zeitintervall ist, um einen kontinuierlichen Übergang zur Kochtemperatur zu erreichen. Der Energiebedarf wird in der Aufheizphase so angepaßt, daß die vorgegebene Kochtemperatur möglichst schnell erreicht wird, wobei die Heizleistung automatisch an die Art und Menge des Kochgutes im Dampfdruck-Kochgefäß angepaßt wird. Darüber hinaus ist sichergestellt, daß die vorgegebene Kochtemperatur ohne überschwinger eingeregelt wird und dies mit dem optimal angepaßten Energiebedarf.

Die Drosselung der Heizleistung bei schenllem Temperaturanstieg im zweiten Temperaturbereich wird nach einer Ausgestaltung so vorgenommen, daß während des zweiten Temperaturbereiches bis zum Erreichen der Siedetemperatur die Einschaltdauer gleich dem vorgegebenen Zeitintervall gewählt wird, wenn die ermittelte Temperaturdifferenz eine erste vorgegebene Temperaturdifferenz unterschreitet, jedoch bei Überschreitung einer zweiten vorgegebenen Temperaturdifferenz die Einschaltdauer auf Null gesetzt wird und im Bereich zwischen diesen beiden vorgegebenen Werten der Temperaturdifferenz die Einschaltdauer umgekehrt proportional zur ermittelten Temperaturdifferenz bemessen wird, während sie im dritten Temperaturabschnitt dadurch erreicht wird, daß die während des dritten Temperaturbereiches zur Ermittlung der zweiten Zeitdauer vorgegebene Abhängigkeit im wesentlichen einer Hyperbelfunktion entspricht.

Eine einfache Anordnung zur Durchführung des Verfahrens mit einem elektrischen Heizelement zur Erwärmung eines Dampfdruck-Kochtopfes, welches von einem Halbleiterschalter der Steuerschaltung ein- und ausgeschaltet wird, der von einem Nulldurchgangsschalter einer bekannten Periodengruppensteuerung angesteuert ist, und einem Temperaturfühler im oder am Dampfdruck-Kochgefäß angesteuert ist, wobei die Dauer der Periodengruppe dem vorgegebenen Zeitintervall entspricht, ist dadurch gekennzeichnet, daß ein erster Programmspeicher zur Ermittlung der ersten Zeitdauer und ein zweiter Programmspeicher zur Ermittlung der zweiten Zeitdauer für die Einschaltdauer des Heizelementes vorgesehen sind.

Die Auswertung der Zeitspanne im ersten Temperaturbereich und ihre Auswirkung auf die Steuerschaltung ist dabei so, daß beim Erreichen des unteren vorgegebenen Temperaturwertes eine Meßschaltung mit der Zeitmessung beginnt, die beim Erreichen des oberen vorgegebenen Temperaturwertes beendet wird, daß nur bei Überschreitung der vorgegebenen Zeitspanne der erste Programmspeicher von der Meßschaltung angesteuert wird, dem in den folgenden vorgegebenen Zeitintervallen die ermittelte Temperaturdifferenz zugeführt wird, und daß der erste Programmspeicher der Steuerschaltung ein der zugeführten Temperaturdifferenz entsprechendes, die zugeordnete Einschaltzeit kennzeichnendes Signal zuführt.

Die Ableitung der für den dritten Temperaturbereich erforderlichen Daten zur Regelung der Heizleistung wird nach einer Ausgestaltung so ausgeführt, daß nach dem Erreichen der Siedetemperatur eine Differenzschaltung die Temperaturabweichung zwischen vorgegebener Kochtemperatur und dem gemessenen Istwert der Temperatur feststellt, daß in dem vorgegebenen Zeitintervall die Temperaturdifferenz in einem Schaltkreis ermittelt wird, daß am Ende jeden Zeitintervalls dem zweiten Programmspeicher die ermittelte Temperaturabweichung von der Differenzschaltung und die ermittelte Temperaturdifferenz von dem Schaltkreis zugeführt wird und daß der zweite Programmspeicher der Steuerschaltung ein den zugeführten Werten von Temperaturabweichung und Temperaturdifferenz entsprechendes, die zugeordnete Einschaltdauer kennzeichnendes Signal zuführt.

Die Messung der Temperaturdifferenz im dritten Temperaturbereich ist zur Unterdrückung von kurzzeitigen Temperaturschwankungen so ausgeführt, daß während des vorgegebenen Zeitintervalls die Temperatur periodisch abgetastet und die ermittelten Werte in einen Zwischenspeicher übertragen werden, und daß nach der Abtastperiode, die dem Zeitintervall entspricht, jeweils aus den ersten k- und den letzten k-Werten je ein Mittelwert ermittelt wird, aus denen die einer gemittelten Temperaturdifferenz entsprechende Differenz gebildet wird, wobei k kleiner ist als n/2.

Die Erfindung wird anhand der Zeichnungen näher erläutert. Es zeigt:

Fig. 1    verschiedene Temperatur-Zeit-Kennlinien, die die unterschiedlichen Aufheizphasen eines Dampfdruck-Kochgefäße erkennen lassen,

Fig. 2    ein Blockschaltschild der Anordnung zum Steuern und Regeln der Heizleistung in der Aufheizphase nach der Erfindung,

Fig. 3    die Abhängigkeit der Einschaltdauer s im zweiten Temperaturbereich von der Temperaturdifferenz △T nach dem ersten Programm zur Steuerung bei schnellem Temperaturanstieg bis zur Siedetemperatur Ts und

Fig. 4 die Abhängigkeit der Einschaltdauer s im dritten Temperaturbereich von der ermittelten Temperaturdifferenz △T und der Temperaturabweichung Tk-Ti zwischen vorgegebener Kochtemperatur Tk und gemessenem Istwert der Temperatur Ti.

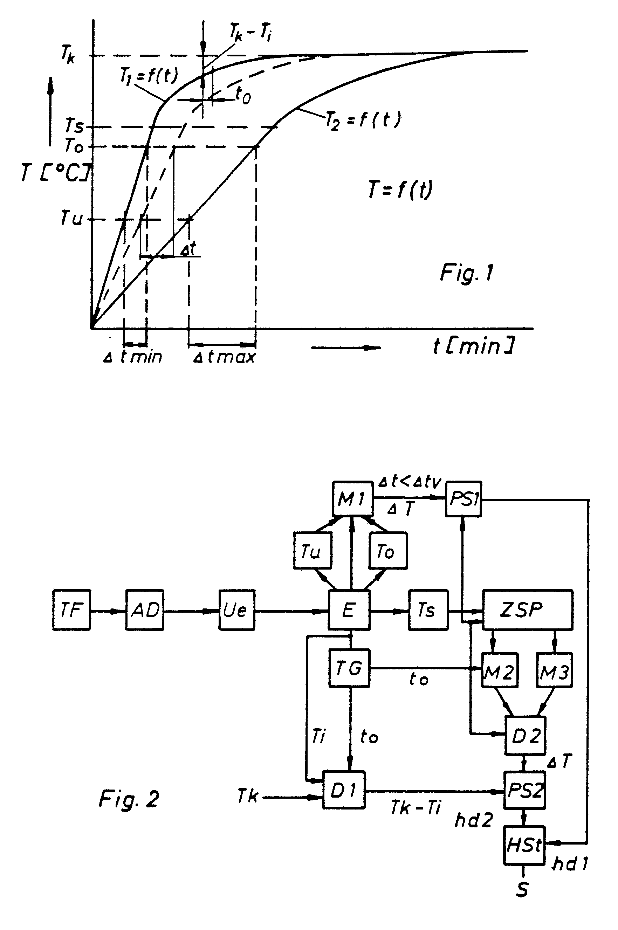

In Fig. 1 sind die Temperatur-Zeit-Kennlinien T=f (t) in der Aufheizphase dargestellt. Dabei hat die Kurve T1=f (t) einen steilen Anstieg, während die Kurve T2=f (t) langsam ansteigt. Der unterschiedliche Temperaturanstieg hängt bei vorgegebener maximaler Heizleistung zu Beginn der Aufheizphase von der Menge und Art des Kochgutes in dem Dampfdruck-Kochgefäß ab. Befindet sich nur eine kleine Menge Flüssigkeit im Dampfdruck-Kochgefäß, dann verläuft die Aufheizphase nach der Kurve T1=f (t). Befindet sich in dem Dampfdruck-Kochgefäß eine kleine Flüssigkeitsmenge zur Dampferzeugung und darüber eine Menge an festem Kochgut, dann verläuft die Aufheizphase nach der Kurve T2=f (t). Wird in einem ersten Temperaturbereich zwischen einem unteren vorgegebenen Temperaturwert Tu von z. B. 60°C und einem oberen vorgegebenen Temperaturwert To von z. B. 85°C die erforderliche Zeitspanne △t für diesen Übergang ermittelt, dann kann diese Zeitspanne △t von einem minimalen Wert △tmin bis zu einem maximalen Wert △tmax liegen. Es wird nun eine Zeitspanne △tv vorgegeben, die dazwischen liegt und etwa 2 min. beträgt. Wird diese vorgegebene Zeitspanne △tv überschritten, dann kann bis zur Siedetemperatur Ts von etwa 100°C mit voller Heizleistung weiter geheizt werden. Liegt dagegen die ermittelte Zeitspanne △t unterhalb der vorgegebenen Zeitspanne △tv, dann muß in einem zweiten anschließenden Temperaturbereich bis zur Siedetemperatur Ts die Heizleistung bereits reduziert weden. Wird im zweiten Temperaturbereich die Temperaturdifferenz △T in einem vorgegebenen Zeitintervall to gemessen, dann kann, abhängig von dieser Temperaturdifferenz △T die Heizleistung mehr oder weniger reduziert werden, wie noch gezeigt wird. Die Abhängigkeit wird als erstes Programm fest vorgegeben, so daß nach der Ermittlung der Temperaturdifferenz △T sofort die Einschaltdauer s für das Heizelement dem folgenden Zeitintervall to feststeht. Dabei ist von Vorteil, wenn die Steuerschaltung HSt für das Heizelement als an sich bekannte Periodengruppensteuerung ausgelegt ist, bei der die Dauer für die Periodengruppe dem vorgegebenen Zeitintervall to entspricht. In Abhängigkeit von der ermittelten Temperaturdifferenz △T kann dann sofort die Einschaltdauer s in Prozent des Zeitintervalls to oder in Perioden angegeben werden.

Sobald die Siedetemperatur Ts erreicht ist, wird die Heizleistung unabhängig von dem bis dahin erfolgten Temperaturanstieg nach einem zweiten, fest vorgegebenen Programm verändert. Dabei wird wieder in dem vorgegebenen Zeitintervall to die Temperaturdifferenz △T ermittelt. Gleichzeitig wird aber die Temperaturabweichung Tk-Ti zwischen der vorgegebenen Kochtemperatur Tk und dem gemessenen Istwert der Temperatur Ti erfaßt. Die Heizleistung wird nun in Abhängigkeit von der ermittelten Temperaturdifferenz △T während des Zeitintervalles to und der vorliegenden Temperaturabweichung Tk-Ti zwischen Kochtemperatur Tk und dem gemessenen Istwert der Temperatur Ti in dem folgenden Zeitintervall to reduziert. Dabei gibt das zweite Programm für die verschiedenen Temperaturdifferenzen △T und die verschiedenen Temperaturabweichungen Tk-Ti die Einschaltdauer s für das Heizelement in Prozenten oder direkt in Perioden oder Sekunden an, wie noch gezeigt wird.

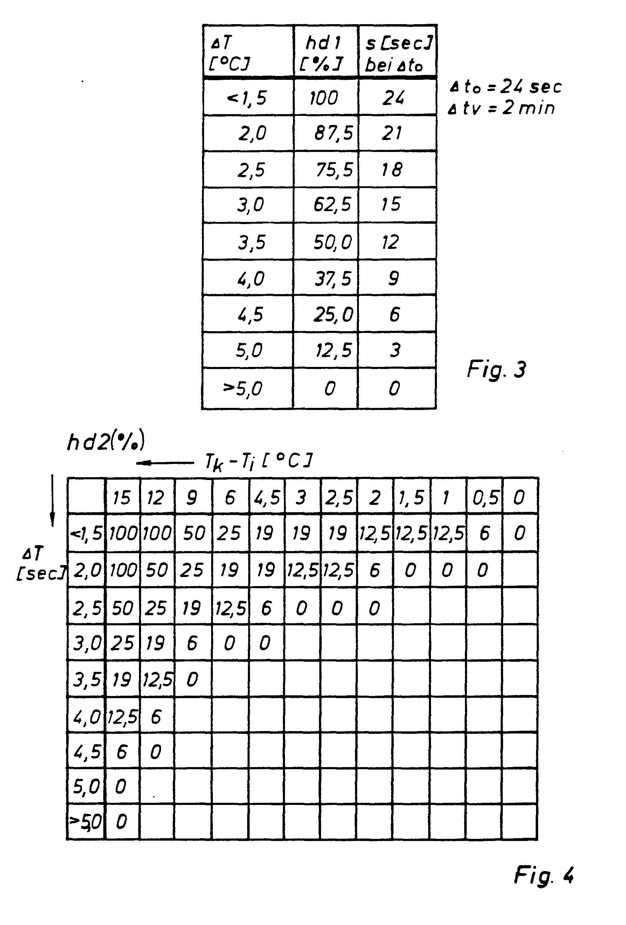

Anhand des Blockschaltbildes nach Fig. 2 wird die Aufheizphase näher erläutert. Der Temperaturfühler TF erfaßt die Temperatur im oder am Dampfdruck-Kochgefäß. Der Meßwert wird über den Analog-Digital-Wandler AD in ein Digitalsignal umgewandelt, das über die Übertragungsstrecke Ue zum Empfänger E gelangt. Der empfangene Temperaturmeßwert wird mit dem Schaltkreis Tu auf das Erreichen des unteren Temperaturwertes Tu von z. B. 60°C überwacht. Ist dieser Temperaturwert Tu erreicht, dann wird die Meßschaltung M1 angesteuert, die die Zeitspanne △t ermittelt, die verstreicht, bis der Schaltkreis To das Erreichen des oberen Temperaturwertes To von z. B. 85°C anzeigt. Beide Temperaturwerte Tu und To liegen unterhalb der Siedetemperatur Ts von etwa 100°C. Die Meßschaltung M1 entscheidet, ob die ermittelte Zeitspanne △t kleiner oder größer als die vorgegebene Zeitspanne △tv von z. B. 2 Minuten ist. Ist die Zeitspanne △t größer als △tv, dann liegt ein langsamer Temperaturanstieg vor und es kann bis zur Siedetemperatur Ts mit voller Heizleistung weiter geheizt werden. Ist dagegen die ermittelte Zeitspanne △t kleiner als △tv, dann liegt ein schneller Temperaturanstieg vor und die Heizleistung wird auch schon im folgenden zweiten Temperaturbereich, der von dem oberen Temperaturwert To bis zur Siedetemperatur Ts reicht, reduziert. Es wird nun wieder in vorgegebenen Zeitintervallen to der weitere Temperaturanstieg als Temperaturdifferenz △T ermittelt und in diesen von einem Taktgeber TG erzeugten Zeitintervallen to der erste Programmspeicher PS1 angesteuert. Dieser erste Programmspeicher PS1 enthält die Vorgaben nach Fig. 3, die angeben, welche Einschaltdauer einer ermittelten Temperaturdifferenz △T im Zeitintervall to zuzuordnen ist. Der Programmspeicher PS1 führt der Steuerschaltung HSt ein Signal hd1 zu, das in Prozenten die Einschaltdauer s, bezogen auf das Zeitintervall to, für das folgende Zeitintervall to angibt. Der Programmspeicher PS1 kann jedoch auch direkt die zugehörige Einschaltdauer s ableiten.

Wie die Fig. 3 zeigt, bleibt unterhalb einer vorgegebenen ersten Temperaturdifferenz $\Delta T$ von z. B. 1,5°C die Heizleistung in dem folgenden Zeitintervall to voll wirksam, während oberhalb einer vorgegebenen zweiten Temperaturdifferenz $\Delta T$ von z. B. 5°C das Heizelement in dem folgenden Zeitintervall to voll abgeschaltet wird.

Ist die Siedetemperatur Ts erreicht, dann wird unabhängig vom Temperaturanstieg die Heizleistung in einem dritten Temperaturbereich von der Siedetemperatur Ts bis zur vorgegebenen Kochtemperatur Tk nach einem zweiten Programm, wie es in Fig. 4 gezeigt ist, gesteuert. Mit dem Erreichen der Siedetemperatur Ts steuert der Schaltkreis Ts den Zwischenspeicher ZSP an und es werden in dem vorgegebenen Zeitintervall to eine Anzahl n Meßwerte in Digitalform in den Zwischenspeicher ZSP übertragen. Am Ende des Zeitintervalles to werden aus den k ersten und k letzten Meßwerten mittels der Schaltkreise M2 und M3 Mittelwerte gebildet. Aus diesen Mittelwerten bildet der Schaltkreis D2 die gemittelte Temperaturdifferenz $\Delta T$, bei der kleine Temperaturschwankungen eliminiert sind. Gleichzeitig wird über den Schaltkreis D1 die Temperaturabweichung Tk-Ti abgeleitet. Die gemittelte Temperaturdifferenz $\Delta T$ und die Temperaturabweichung Tk-Ti gelangen zum zweiten Programmspeicher PS2, der entsprechend der Fig. 4 die diesen Werten zugeordnete Einschaltdauer hd2 für das nächste Zeitintervall to ableitet und an die Steuerschaltung HSt weitergibt. Die Einschaltdauer hd2 in Prozenten des Zeitintervalles to ist dabei um so kleiner, je kleiner der Temperaturabstand Tk-Ti ist und um so kleiner, je größer die gemittelte Temperaturdifferenz $\Delta T$ ist.

Die in Fig. 4 gezeigte Abhängigkeit entspricht im wesentlichen einer Hyperbelfunktion $y = \frac{k}{x}$.

**Patentansprüche**

1. Verfahren zum Steuern und Regeln der Heizleistung in der Aufheizphase eines Dampfdruck-Kochgefäßes, das von einem mittels Steuerschaltung (HSt) ein- und ausschaltbaren elektrischen Heizelement erwärmt wird, dadurch gekennzeichnet,

a)  daß während eines ersten Temperaturbereiches (T < To) der Aufheizphase bei maximaler Heizleistung

a1)  die Zeitspanne ($\Delta t$) gemessen wird, die benötigt wird, um das Kochgut von einem unteren, vorgegebenen Temperaturwert (Tu) auf einen oberen vorgegebenen Temperaturwert (To) zu erwärmen, wobei diese vorgegebenen Temperaturwerte (Tu, To) unterhalb der Siedetemperatur (Ts) des Wassers liegen,

b)  daß während des nachfolgenden zweiten Temperaturbereiches (To < T < Ts) der Aufheizphase

b1)  die gemessene Zeitspanne ($\Delta t$) mit einer vorgegebenen Zeitspanne ($\Delta tv$ von z. B. 2 min) verglichen wird,

b2)  wobei dann, wenn die gemessene Zeitspanne ($\Delta t$) die vorgegebene Zeitspanne ($\Delta tv$) überschreitet, die Steuerschaltung (HSt) das Heizelement bis zum Erreichen der Siedetemperatur (Ts) dauernd eingeschaltet hält,

b3)  wobei jedoch dann, wenn die gemessene Zeitspanne ($\Delta t$) die vorgegebene Zeitspanne ($\Delta tv$) unterschreitet,

b3.1)  der Istwert der Temperatur im Dampfdruck-Kochgefäß am Anfang und Ende eines vorgegebenen Zeitintervalles (to von z. B. 24 S) gemessen wird,

b3.2)  dann aus diesen beiden Temperaturmeßwerten deren Temperaturdifferenz ($\Delta T$) ermittelt wird und

b3.3)  dann die Steuerschaltung (HSt) in Abhängigkeit von der ermittelten Temperaturdifferenz ($\Delta T$) die Einschaltdauer (s) des Heizelementes innerhalb des folgenden vorgegebenen Zeitintervalls (to) auf eine erste Zeitdauer (hd1) derart (Fig. 3) verkürzt, daß diese erste Zeitdauer (hd1) mit zunehmender Temperaturdifferenz ($\Delta T$) abnimmt,

c)  daß während des nachfolgenden dritten Temperaturbereiches (Ts < T < Tk) der Aufheizphase ab Erreichen der Siedetemperatur (Ts) bis zu einer vorgegebenen Kochtemperatur mit erhöhtem Dampfdruck (Tk),

c1)  diese Temperaturdifferenz ($\Delta T$) innerhalb eines gleich großen vorgegebenen Zeitintervalls (to) in gleicher Weise ermittelt wird, und

c2)  daß die Steuerschaltung (HSt) dann in Abhängigkeit von der ermittelten Temperaturdifferenz ($\Delta T$) die Einschaltdauer (s) des Heizelementes innerhalb des folgenden vorgegebenen Zeitintervalls (to) auf eine zweite Zeitdauer (hd2) derart (Fig. 4) verkürzt, daß diese zweite Zeitdauer (td2) mit zunehmender Temperaturdifferenz ($\Delta T$) um so mehr abnimmt, je größer die ermittelte Temperaturdifferenz ($\Delta T$) und je kleiner die Temperaturabweichung (Tk-Ti) zwischen vorgegebener Kochtemperatur (Tk) und gemessenem Istwert der Temperatur (Ti) ist (Fig. 1).

2. Verfahren nach Anspruch 1, dadurch gekennzeichnet, daß während des zweiten Temperaturbereiches bis zum Erreichen der Siedetemperatur (Ts) die Einschaltdauer (s) gleich dem vorgegebenen Zeitintervall (to) von z. B. 24s gewählt wird, wenn die ermittelte Temperaturdifferenz ( $\triangle$ T) eine erste vorgegebene Temperaturdifferenz (von z. B. 1,5° C) unterschreitet, jedoch bei Überschreitung einer zweiten vorgegebenen Temperaturdifferenz ( von z. B. 5° C) die Einschaltdauer (s) auf Null gesetzt wird und im Bereich zwischen diesen beiden vorgegebenen Werten der Temperaturdifferenz die Einschaltdauer (s) umgekehrt proportional zur ermittelten Temperaturdifferenz ( $\triangle$ T) bemessen wird (Fig. 3).

3. Verfahren nach einem der Ansprüche 1 und 2, dadurch gekennzeichnet, daß die während des dritten Temperaturbereiches zur Ermittlung der zweiten Zeitdauer (hd2) vorgegebene Abhängigkeit im wesentlichen einer Hyperbelfunktion $y = \frac{k}{x}$ entspricht.

4. Anordnung zur Durchführung des Verfahrens nach einem der Ansprüche 1 und 2 mit einem elektrischen Heizelement zur Erwärmung eines Dampfdruck-Kochgefäßes, welches von einem Halbleiterschalter der Steuerschaltung (HSt) ein- und ausgeschaltet wird, der von einem Nulldurchgangsschalter einer bekannten Periodengruppensteuerung angesteuert ist, und einem Temperaturfühler (TF) im oder am Dampfdruck-Kochgefäß, wobei die Dauer der Periodengruppe dem vorgegebenen Zeitintervall (to) entspricht, dadurch gekennzeichnet, daß ein erster Programmspeicher (PS1) zur Ermittlung der ersten Zeitdauer (hd1) und ein zweiter Programmspeicher (PS2) zur Ermittlung der zweiten Zeitdauer (hd2) für die Einschaltdauer (s) des Heizelementes vorgesehen sind (Fig. 2).

5. Anordnung nach Anspruch 4, dadurch gekennzeichnet, daß beim Erreichen des unteren vorgegebenen Temperaturwertes (Tu) eine Meßschaltung (M1) mit der Zeitmessung beginnt, die beim Erreichen des oberen vorgegebenen Temperaturwertes (To) beendet wird, daß nur bei Überschreitung der vorgegebenen Zeitspanne ( $\triangle$ tv) der erste Programmspeicher (PS1) von der Meßschaltung (M1) angesteuert wird, dem in den folgenden vorgegebenen Zeitintervallen (to) die ermittelte Temperaturdifferenz ( $\triangle$ T) zugeführt wird, und daß der erste Programmspeicher (PS1) der Steuerschaltung (HSt) ein der zugeführten

Temperaturdifferenz ( $\triangle$ T) entsprechendes, die zugeordnete Einschaltdauer (s) kennzeichnendes Signal (hd1) zuführt (Fig. 2).

6. Anordnung nach einem der Ansprüche 4 und 5, dadurch gekennzeichnet, daß nach dem Erreichen der Siedetemperatur (Ts) eine Differenzschaltung (D1) die Temperaturabweichung (Tk-Ti) zwischen vorgegebener Kochtemperatur (Tk) und dem gemessenen Istwert der Temperatur (Ti) feststellt, daß in dem vorgegebenen Zeitintervall (to) die Temperaturdifferenz ( $\triangle$ T) in einem Schaltkreis (D2) ermittelt wird, daß am Ende jeden Zeitintervalls (to) dem zweiten Programmspeicher (PS2) die ermittelte Temperaturabweichung (Tk-Ti) von der Differenzschaltung (D1) und die ermittelte Temperaturdifferenz ( $\triangle$ T) von dem Schaltkreis (D2) zugeführt wird und daß der zweite Programmspeicher (PS2) der Steuerschaltung (HSt) ein den zugeführten Werten von Temperaturabweichung (Tk-Ti) und Temperaturdifferenz ( $\triangle$ T) entsprechendes, die zugeordnete Einschaltdauer (s) kennzeichnendes Signal (hd2) zuführt (Fig. 2).

7. Anordnung nach einem der Ansprüche 4 bis 6, dadurch gekennzeichnet, daß während des vorgegebenen Zeitintervalls (to) die Temperatur periodisch abgetastet und die ermittelten n Werte in einen Zwischenspeicher (ZSP) übertragen werden, und daß nach der Abtastperiode, die dem Zeitintervall (to) entspricht, jeweils aus den ersten k- und den letzten k-Werten je ein Mittelwert (M2, M3) ermittelt wird, aus denen die einer gemittelten Temperaturdifferenz ( $\triangle$ T) entsprechende Differenz (D2) gebildet wird, wobei k kleiner ist als n/2.

**Claims**

1. A method for controlling the heating power during the heating-up period of a pressure cooker which is heated by an electric heating element that can be switched on and off by a control switch (HSt), with the following characteristics:

a)   during the first temperature range (T < To) of the heating-up period, at maximum heating power,

a1)   the period of time ( $\triangle$ t) is measured that is necessary to heat up the food from a preset lower temperature (Tu) to a preset upper temperature (To), both temperature values (Tu, To) being below the boiling temperature (Ts) of the water;

b)   during the following, second temperature range (To <T<Ts) of the heating-up period

b1) the measured span of time ($\Delta t$) is compared with the preset period of time ($\Delta tv$ of e.g. 2 min),

b2) and if the measured time ($\Delta t$) exceeds the preset time ($\Delta tv$) the control switch will switch on the heating element and keep it operating until the boiling temperature (Ts) is reached,

b3) but if the measured period of time ($\Delta t$) is less than the preset time ($\Delta tv$),

b3.1) the actual temperature inside the pressure cooker is measured at the beginning and at the end of a preset span of time (to of e.g. 24 s.),

b3.2) then the temperature difference ($\Delta t$) between these two measured temperature values is determined, b3.3) and depending on the temperature difference ($\Delta T$) thus establisched, the control switch (HSt) will reduce the operating time (s) of the heating element during the following preset period of time (to) to a first interval (hd1) and in such a way (Fig. 3) that this first interval (hd1) decreases with an increase in temperature difference ($\Delta t$);

c) during the subsequent, third temperature range (Ts<T<Tk) of the heating-up period, i.e. after reaching the boiling temperature (Ts) and until reaching a preset cooking temperature (Tk) with higher steam pressure,

c1) this temperature difference ($\Delta T$) is determined in the same way during a preset interval of the same duration (to),

c2) and depending on the established temperature difference ($\Delta T$), the control switch (HSt) will reduce the operating time (s) of the heating element during the following, preset period of time (to) to a second interval (hd2) and in such a way (fig. 4) that this second interval (td2) will decrease with an increase in temperature difference ($\Delta T$) all the more, the greater the established temperature difference ($\Delta T$) and the smaller the temperature deviation (Tk-Ti) between preset cooking temperature (Tk) and measured actual temperature (Ti) (fig. 1).

2. Method pursuant to claim 1, with the following characteristics:
during the second temperature range and until the boiling temperature (Ts) is reached, the operating time (s) chosen is equal to the preset time interval (to), e.g. 24 s., if the established temperature difference ($\Delta T$) falls below a first, preset temperature difference (of e.g. 1,5°C), but if a second, preset temperature (of e.g. 5°C) is exceeded, the operating time (s) is set to zero, and within the range between these two preset values for temperature difference, the operating time (s) is inversely proportional to the established temperature difference ($\Delta T$) (fig. 3).

3. Method pursuant to either claim 1 or 2, with the following characteristics:
during the third temperature range, the preset function for the determination of the second time interval (hd2) is, in essence, a hyperbolic function $y = \frac{k}{x}$.

4. Configuration when applying the method pursuant to either claim 1 or 2, with an electric heating element to heat up a pressure cooker with said element being switched on and off by a semi-conductor switch that is triggered by a zero passage switch of a known period group control, and a temperature sensor (TF) inside or on the pressure cooker, the cycle duration being equivalent to the preset time interval, with the following characteristics:
a first programme storage (PS1) is provided to determine the first period of time (hd1), and there is a second programme storage (PS2) for determining the second time interval (hd2) for the operating time (s) of the heating element (fig. 2).

5. Configuration pursuant to claim 4, with the following characteristics:
when the preset lower temperature (Tu) is reached, a measuring circuit (M1) starts to measure the time and stops when the preset upper temperature value (To) is reached, only if the preset time interval ($\Delta tv$) is exceeded, will the first programme storage (PS1) be triggered by the measuring circuit (M1), and in the following preset time intervals (to) the recorded temperature difference ($\Delta T$) will be fed into the storage, and the first programme storage (PS1) will transmit to the control switch (HSt) a signal indicating the assigned operating time (s) that corresponds to the input temperature difference ($\Delta T$).

6. Configuration pursuant to either claim 4 or 5, with the following characteristics:
once the boiling temperature (Ts) is reached, a differential circuit (D1) establishes the temperature deviation (Tk-Ti) between the preset cooking temperature (Tk) and the actual temperature measured (Ti), within the preset time (to) the temperature difference ($\Delta T$) is established by a circuit (D2), at the end of each interval (to), the second programme storage (PS2) will receive the established temperature deviation (Tk-Ti) as an input from the differential circuit (D1) as well as the temperature difference ($\Delta T$) as established by circuit (D2), and the second programme storage (PS2) will transmit to the control switch (HSt) a signal (hd2) indicating the assigned operating time (s), which corresponds to the input values for temperature deviation (Tk-Ti) and temperature difference ($\Delta T$).

7. Configuration pursuant to one of claims 4 to 6,

with the following characteristics:

during the preset time interval (to) the temperature is scanned periodically and the recorded n-values are transmitted to a buffer store (ZSP),

and after the scanning period which corresponds to interval (to), one mean value each (M2, M3) is calculated for the first kvalues and for the last k-values, and from these a difference (D2) is calculated which corresponds to a mean temperature difference ($\Delta T$) k being less than n/2.

**Revendications**

1. Procédé de commande et de régulation de la puissance de chauffage pendant la phase d'échauffement d'un récipient de cuisson sous pression de vapeur, qui est chauffé par un élément chauffant électrique pouvant être mis en service et hors service au moyen d'un circuit (HSt) de commande, procédé caractérisé en ce que

a) pendant une première plage (T < To) de températures de la phase d'échauffement sous puissance de chauffage maximale,

a1) l'espace ($\Delta t$) de temps qui est nécessaire pour porter la température du produit à faire cuire, d'une valeur inférieure ($T_u$) prédéterminée à une valeur supérieure ($T_o$) prédéterminée de la température, est mesuré, ces valeurs ($T_u$, $T_o$) prédéterminées de la température étant inférieures à la température ($T_s$) d'ébullition de l'eau ;

b) pendant la seconde plage ($T_o < T < T_s$) de températures qui suit au cours de la phase d'échauffement,

b1) l'espace mesuré ($\Delta t$) de temps est comparé à un espace de temps ($\Delta tv$, égal par exemple à 2 min.), prédéterminé ;

b2) si l'espace ($\Delta t$) de temps mesuré est supérieur à l'espace ($\Delta tv$) de temps prédéterminé, le circuit (HSt) de commande maintient l'élément chauffant branché en permanence jusqu'à l'obtention de la température ($T_s$) d'ébullition ;

b3) mais si l'espace ($\Delta t$) de temps mesuré est plus court que l'espace ($\Delta tv$) de temps prédéterminé.

b3.1) la valeur effective de la température dans le récipient est mesurée au début et à la fin d'un intervalle de temps prédéterminé ($t_o$), égal par exemple à 24 s);

b3.2) puis la différence ($\Delta T$) entre ces deux valeurs de la température est enregistrée, et

b3.3) le circuit (HSt) de commande raccourcit alors, en fonction de cette différence ($\Delta T$) de températures enregistrée, la durée (s) de branchement de l'élément chauffant au cours de l'intervalle ($t_o$) prédéterminé de temps qui suit, pour la porter, à une première durée (hd1) (fig. 3), de façon que cette première durée (hd1) diminue quand ladite différence ($\Delta T$) de températures augmente ;

c) pendant la troisième plage ($T_s < T < T_k$) de températures qui suit au cours de la phase d'échauffement à partir de l'obtention de la température ($T_s$) d'ébullition jusqu'à une température ($T_k$) prédéterminée de cuisson sous pression de vapeur plus élevée ;

c1) la différence ($\Delta T$) de températures dans un espace de temps ($t_o$) déterminé de même grandeur est décelée de la même manière et

c2) le circuit (HSt) de commande raccourcit alors, en fonction de la différence de températures décelée, ($\Delta T$) la durée (s) de branchement de l'élément chauffant dans l'intervalle ($t_o$) suivant prédéterminée de temps pour porter la durée à une seconde durée (fig. 4), de façon que cette seconde durée (hd2) diminue d'autant plus, quand cette différence ($\Delta T$) de températures augmente, que ladite différence ($\Delta T$) décelée est plus grande et que l'écart ($T_k$-$T_i$) entre la température ($T_k$) prédéterminée de cuisson et la valeur réelle ($T_i$) mesurée de cette température est plus faible (figure 1).

2. Procédé selon la revendication 1, caractérisé en ce que, pendant la seconde plage de températures jusqu'à l'arrivée à la température ($T_s$) d'ébullition, la durée (s) de branchement choisie est égale à l'intervalle ($t_o$) prédéterminé de temps qui est par exemple de 24 s, si la différence ($\Delta T$) de températures décelée est inférieure à une première différence prédéterminée (égale par exemple à 1,5° C) mais, si une seconde différence de températures prédéterminée (égale par exemple à 5° C) est dépassée, la durée (s) de branchement est ramenée à zéro et, dans la zone comprise entre ces deux valeurs prédéterminées de la différence ($\Delta T$) de températures, la durée (s) de branchement est inversement proportionnelle à la différence ($\Delta T$) de températures décelée (figure 3).

3. Procédé selon l'une des revendications 1 et 2, caractérisé en ce que pendant la troisième plage de températures, la relation prédéterminée destinée à établir la seconde durée (hd2) de branchement correspond sensiblement à une

fonction hyperbolique $y = \frac{k}{x}$.

4. Dispositif pour la mise en oeuvre du procédé selon l'une des revendications 1 et 2, ce dispositif comportant un élément chauf fant électrique, qui est destiné à chauffer un récipient de cuisson sous pression de vapeur et est mis en service et hors service par un interrupteur à semiconducteur d'un circuit (HSt) de commande piloté par un interrupteur fonctionnant lors du passage par le zéro et faisant partie d'une commande connue par groupes de périodes, ainsi qu'une sonde thermométrique (TF) montée dans ou sur ce récipient, la durée des groupes de périodes correspondant à l'intervalle ($t_o$) de temps prédéterminé, dispositif caractérisé en ce qu'il comprend une première mémoire (PS1) de programmation, destinée à déterminer la première durée (hd1) de branchement de l'élément chauffant et une seconde mémoire (PS2) de programmation destinée à déterminer la seconde durée (hd2) du temps s de branchement de cet élément chauffant (figure 2).

5. Dispositif selon la revendication 4, caractérisé en ce que, quand la valeur ($T_u$) de la température inférieure prédéterminée est atteinte, un circuit de mesure (M1) commence à compter la durée, qui se termine à l'arrivée à la valeur ($T_o$) de la température supérieure prédéterminée: ce n'est que si l'espace ($\Delta tv$) prédéterminé de temps est dépassé que le circuit de mesure (M1) met en service la première mémoire (PS1) de programmation, dans laquelle la différence ($\Delta T$) de températures décelée au cours des intervalles ($t_o$) de temps prédéterminés suivants est injectée, et cette première mémoire (PS1) envoie au circuit (HSt) de commande un signal (hd1) correspondant à cette différence ($\Delta T$) de températures injectée et caractérisant la durée (s) de branchement allouée.

6. Dispositif selon l'une des revendications 4 et 5, caractérisé en ce que, quand la température ($T_s$) d'ébullition a été atteinte, un circuit différentiel (D1) constate l'écart ($T_k - T_i$) entre une température ($T_k$) prédéterminée de cuisson et la valeur réelle ($T_i$) mesurée pour la température; dans l'intervalle ($t_o$) de temps prédéterminé, la différence ($\Delta T$) de températures est décelée dans un circuit (D2) de commutation à la fin de chaque intervalle ($t_o$) de temps, la seconde mémoire (PS2) de programmation reçoit du circuit différentiel (D1) l'écart ($T_k - T_i$) de températures décelé et reçoit du circuit (D2) de commutation la différence ($\Delta T$) de températures décelée; et cette seconde mémoire (PS2) envoie au circuit (HSt) de commande un signal (hd2) correspondant aux valeurs reçues concernant l'écart ($T_k - T_i$) de températures et la différence ($\Delta T$) de températures, et caractérisant la durée (s) de branchement attribuée (figure 2).

7. Dispositif selon l'une des revendications 4 à 6, caractérisé en ce que pendant l'intervalle ($t_o$) de temps prédéterminé, la température est décelée périodiquement et les $n$ valeurs relevées sont transmises à une mémoire intermédiaire (ZSP) et après la période de détection, qui correspond à cet intervalle ($t_o$) de temps, il est établi à partir des $k$ premières et des $k$ dernières valeurs une valeur moyenne (M2, M3), respective, à partir desquelles la différence (D2), correspondant à une différence ($\Delta T$) de températures décelée, est formée, $k$ étant inférieur à $n/2$.

Fig. 1

Fig. 2

1

| ΔT [°C] | hd1 [%] | s [sec] bei Δto |
|---|---|---|
| <1,5 | 100 | 24 |
| 2,0 | 87,5 | 21 |
| 2,5 | 75,5 | 18 |
| 3,0 | 62,5 | 15 |
| 3,5 | 50,0 | 12 |
| 4,0 | 37,5 | 9 |
| 4,5 | 25,0 | 6 |
| 5,0 | 12,5 | 3 |
| >5,0 | 0 | 0 |

Δto = 24 sec
Δtv = 2 min

Fig. 3

hd2(%)

← Tk − Ti [°C]

ΔT [sec]

| | 15 | 12 | 9 | 6 | 4,5 | 3 | 2,5 | 2 | 1,5 | 1 | 0,5 | 0 |
|---|---|---|---|---|---|---|---|---|---|---|---|---|
| <1,5 | 100 | 100 | 50 | 25 | 19 | 19 | 19 | 12,5 | 12,5 | 12,5 | 6 | 0 |
| 2,0 | 100 | 50 | 25 | 19 | 19 | 12,5 | 12,5 | 6 | 0 | 0 | 0 | |
| 2,5 | 50 | 25 | 19 | 12,5 | 6 | 0 | 0 | 0 | | | | |
| 3,0 | 25 | 19 | 6 | 0 | 0 | | | | | | | |
| 3,5 | 19 | 12,5 | 0 | | | | | | | | | |
| 4,0 | 12,5 | 6 | | | | | | | | | | |
| 4,5 | 6 | 0 | | | | | | | | | | |
| 5,0 | 0 | | | | | | | | | | | |
| >5,0 | 0 | | | | | | | | | | | |

Fig. 4